# EUROPÄISCHE PATENTSCHRIFT

(11) **EP 3 209 433 B1**
(45) Veröffentlichungstag und Bekanntmachung des Hinweises auf die Patenterteilung: **12.12.2018**
(21) Anmeldenummer: 15781907.9
(22) Anmeldetag: 14.10.2015
(51) Int. Cl.: B06B 3/00, B23K 20/10, B29C 65/00, B29C 65/08

(54) **OBERFLÄCHENSTRUKTURIERTES BEARBEITUNGSELEMENT FÜR ULTRASCHALLBEARBEITUNG**
SURFACE-STRUCTURED PROCESSING ELEMENT FOR ULTRASONIC PROCESSING
ÉLÉMENT D'USINAGE À SURFACE STRUCTURÉE POUR USINAGE PAR ULTRASONS

(30) Priorität: 24.10.2014 DE 102014115538
(43) Veröffentlichungstag der Anmeldung: 30.08.2017
(73) Patentinhaber: Herrmann Ultraschalltechnik GmbH & Co. Kg, 76307 Karlsbad (DE)
(72) Erfinder: VOGLER, Ulrich, 88690 Uhldingen-Mühlhofen (DE)
(74) Vertreter: WSL Patentanwälte Partnerschaft mbB
(86) Internationale Anmeldenummer: PCT/EP2015/073824
(87) Internationale Veröffentlichungsnummer: WO 2016/062596

(56) Entgegenhaltungen:
- DE-A1- 10 123 632
- JP-A- 2013 216 023
- US-A1- 2002 062 901
- US-A1- 2007 007 320
- US-A1- 2010 218 881

## Beschreibung

Die vorliegende Erfindung betrifft ein Bearbeitungselement für die Bearbeitung eines Materials mit einer im Wesentlichen zylinderförmigen oder zylindersegmentförmigen Trägerfläche. Das Bearbeitungselement wird während der Bearbeitung um seine Längsachse gedreht, sodass die Trägerfläche auf dem zu bearbeitenden Material abrollt. Dabei sind sowohl Bearbeitungselemente, die eine zylinderförmige Trägerfläche aufweisen, die auf dem zu bearbeitenden Material abrollen und dabei z. B. eine kontinuierliche Längsnaht erzeugen, als auch Bearbeitungselemente bekannt, die lediglich eine - oder mehrere - zylindersegmentförmige Trägerfläche(n) aufweist, so dass beim Rotieren des Bearbeitungselementes die zylindersegmentförmige Trägerfläche nur einmal pro Umdrehung mit dem zu bearbeitenden Material in Kontakt tritt, um z.B. eine Quersiegelnaht zu erzeugen.

Insbesondere dann, wenn solch ein Bearbeitungselement für die Ultraschallbearbeitung von Materialien verwendet wird, wird es in der Regel als Sonotrode, wenn es mit einer Ultraschallschwingung beaufschlagt wird, oder als Amboss, wenn es gegenüber einer Sonotrode angeordnet ist, bezeichnet.

Beispielsweise kann eine Ultraschallbearbeitungsvorrichtung sowohl eine walzenförmige Sonotrode als auch einen walzenförmigen Amboss aufweisen, zwischen denen das bahnförmige Material hindurchgeführt wird und, während das Material von der Sonotrode in Richtung Amboss gedrückt wird, bearbeitet wird.

Häufig ist die Trägerfläche des Ambosses strukturiert, d.h. sie weist mindestens ein Strukturelement, in der Regel jedoch eine Vielzahl von Strukturelementen auf, die in radialer Richtung über der Trägerfläche vorstehen. In einigen Fällen ist stattdessen oder zusätzlich die Trägerfläche der Sonotrode entsprechend strukturiert. Die Strukturelemente dienen dazu, während der Bearbeitung das Material zu verschweißen und gegebenenfalls dem Material ein entsprechendes Muster oder - falls die Strukturelemente die Form eines Logos haben - ein Logo aufzuprägen.

Die Strukturelemente weisen im Stand der Technik eine ebene Oberseite, die dafür vorgesehen ist, mit dem zu bearbeitenden Material in Kontakt zu treten, und umlaufende Seitenflächen auf, die die Oberseite mit der Trägerfläche verbinden. Nach der Bearbeitung mit dem Bearbeitungselement weist das bearbeitete Material eine korrespondierende Oberflächenprägung auf. Die Oberseiten der Strukturelemente bilden zusammen die sogenannte Siegelfläche.

Relevanter Stand der Technik ist in den Patentschriften US5711847A, US2002/062901A1, US2007007320A1, US2010/218881 A1, DE10123632A1, JP2013216023A veröffentlicht.

Grundsätzlich kann das Bearbeitungselement nicht nur für die Ultraschallbearbeitung von Materialien eingesetzt werden, sondern zum Beispiel auch zur Erstellung von Heißsiegelnähten.

Im Folgenden wird die Erfindung jedoch anhand eines Bearbeitungselementes für die Ultraschallbearbeitung insbesondere anhand eines Ambosses mit entsprechenden Strukturelementen beschrieben. Es versteht sich jedoch, dass alle im Folgenden beschriebenen Merkmale auch an einer Sonotrode verwirklicht werden könnten und zudem auch bei anderen Bearbeitungsverfahren eingesetzt werden könnten.

Es gibt Ultraschallbearbeitungsmaschinen zur Herstellung von Quersiegelnähten. In diesem Fall besteht die Trägerfläche von Sonotrode und/oder Amboss aus zylindersegmentförmigen Elementen. Die Materialbearbeitung erfolgt immer dann, wenn die zylindersegmentförmige Trägerfläche mit dem Material in Eingriff gelangt. Dadurch, dass die Trägerfläche nicht kontinuierlich mit dem zu bearbeitenden Material in Kontakt tritt, ist es schwierig, die geeignete Schweißkraft, mit der die Sonotrode auf den Amboss drückt, einzustellen. Üblicherweise kommen hier Regelmechanismen zum Einsatz, die beispielsweise die entsprechende Kraft messen und mit einem Sollwert vergleichen.

Immer dann, wenn eine entsprechende Quersiegelnaht hergestellt werden soll, tritt die zylindersegementförmige Trägerfläche bzw. die auf der Trägerfläche angeordneten Strukturelemente mit dem Material in Eingriff. Aufgrund einer nicht völlig auszuschließenden Elastizität der Halterung, die Sonotrode oder Amboss am Maschinenständer befestigt, führt die von Sonotrode und amboss auzubringende Gegenkraft zu einer Relativverschiebung zwischen Sonotrode und Gegenwerkzeug einerseits und Maschinenständer andererseits. Aufgrund der Rotation des Bearbeitungselementes treten die Strukturelement allerdings abrupt mit dem Material in Eingriff, so dass die Strukturelemente einen abrupten Kraftstoss aufnehmen müssen. In diesem Moment ist es für die Kraftregelung schwierig, die geeignete Kraft einzustellen. Durch das abrupte Ineingrifftreten kommt es zudem zu einer Schwingung der Sonotrode und gegebenenfalls auch des Gegenwerkzeuges aufgrund deren Befestigung am Maschinenständer. Mit anderen Worten kommt es aufgrund des abrupten Stoßes, den die Strukturelemente des Ambosses über das zu bearbeitende Material auf die Sonotrode ausübt, zu einer Relativverschiebung der Sonotrode gegenüber dem Maschinenständer.

Daran schließt sich eine abklingende Schwingung der Sonotrode um eine Ruheposition an, wobei die Kraft, die die Sonotrode auf das Gegenwerkzeug ausübt, und damit auch das Schweißergebnis mit der Schwingung variiert.

In gleicher Weise kommt es, wenn die zylindersegmentförmige Trägerfläche mit dem Material außer Eingriff gerät, zu einer abrupten Relaxation der Sonotrode, was ebenfalls nicht gewünscht ist. Daher ist es Aufgabe der vorliegenden Erfindung, ein Bearbeitungselement zur Verfügung zu stellen, das die abrupte Auslenkung der Sonotrode beim In- oder/und Außerkontakttreten des Materials mit der Trägerfläche reduziert.

Erfindungsgemäß wird dies dadurch gelöst, dass die Oberseite zumindest abschnittsweise in Umfangsrichtung mit einem Krümmungsradius, der größer als 50% des größten Abstands der Oberseite von der Zylinderachse und kleiner als der größte Abstand der Oberseite von der Zylinderachse ist, konvex gekrümmt ist oder aus mindestens zwei Flächenabschnitten besteht, die einen Winkel in Richtung der Zylinderachse einschließen, der kleiner als 180° und größer als 170° ist.

Die Krümmung in Umfangsrichtung bzw. die Abwinkelung der Oberseite führt dazu, dass die Druckbelastung der Sonotrode aufgrund des Ineingrifftretens des Materials mit der Oberseite des Strukturelementes allmählich bzw. in mehreren Schritten erfolgt, wodurch der Kraftstoß, der auf die Sonotrode übertragen wird, reduziert wird.

In einer bevorzugten Ausführungsform ist vorgesehen, die die Krümmung in Umfangsrichtung mit einem Radius ausgeführt ist, der größer als 75% und am besten größer als 90% des größten Abstandes der Oberseite von der Zylinderachse ist. Je kleiner der Krümmungsradius gewählt wird umso kleiner ist der Bereich der Oberseite, der tatsächlich mit dem zu bearbeitenden Material in Kontakt tritt, Je nach Anwendungsfall kann es daher von Vorteil sein, den Krümmungsradius möglichst groß, jedoch kleiner als der größte Abstand der Oberseite von der Zylinderachse zu wählen.

Dadurch ist sichergestellt, dass bei der Verwendung des Bearbeitungselementes der Abstand zwischen Strukturelement und Sonotrode kontinuierlich kleiner wird, bis der kleinste Abstand zwischen Sonotrode und Gegenwerkzeug verwirklicht worden ist.

Bei einer bevorzugten Ausführungsform ist vorgesehen, dass die Oberseite des Strukturelementes einen Hauptabschnitt, der im Wesentlichen eben oder mit einer konvexen Krümmung mit einem Krümmungsradius, der dem Abstand des Hauptabschnittes von der Zylinderachse entspricht, ausgeführt ist, und einen sich in Umfangsrichtung an den Hauptabschnitt anschließenden Fasenabschnitt aufweist, der gegenüber dem Hauptabschnitt abgewinkelt ist, sodass Haupt- und Fasenabschnitt einen Winkel von weniger als 180° einschließen. Dabei wird der Winkel immer innerhalb des Materials des Strukturelementes gemessen.

Dies hat zur Folge, dass - falls der Hauptabschnitt gekrümmt ist - der Fasenabschnitt innerhalb der vom Hauptabschnitt definierten Einhüllenden liegt. Im Grunde genommen ändert sich am Übergang zwischen Haupt- und Fasenabschnitt die Steigung oder die Krümmung der Oberseite.

In einer bevorzugten Ausführungsform ist vorgesehen, dass der Fasenabschnitt in Umfangsrichtung konvex gekrümmt ist und zwar vorzugsweise mit einem Krümmungsradius, der kleiner als der größte Abstand der Oberseite von der Zylinderachse und größer als die Hälfte des größten Abstandes der Oberseite von der Zylinderache, konvex gekrümmt ist.

In einer weiteren bevorzugten Ausführungsform ist vorgesehen, dass die Oberseite zwei sich in Umfangsrichtung an gegenüberliegenden Seiten an den Hauptabschnitt anschließende Fasenabschnitte aufweist, die gegenüber dem Hauptabschnitt abgewinkelt sind, sodass Haupt- und Fasenabschnitt jeweils einen Winkel < 180° einschließen. Bei der Bearbeitung hat somit die Oberseite des Strukturelementes nicht nur einen einlaufenden Fasenabschnitt, sondern zudem einen auslaufenden Fasenabschnitt, wodurch auch am Ende der Bearbeitung des Strukturelementes die vom Gegenwerkzeug auf die Sonotrode aufgebrachte Kraft nur allmählich reduziert wird.

Durch die erfindungsgemäße Maßnahme der Ausbildung der Fasenabschnitte ist bei der Bearbeitung des Materials gewährleistet, dass das Material zunächst zwischen Fasenabschnitt und Sonotrode geführt wird, sodass der Abstand zwischen Gegenwerkzeug und Sonotrode allmählich geringer wird, bis das Material vom Hauptabschnitt bearbeitet wird. Erst wenn der Hauptabschnitt das Material bearbeitet, liegen optimale Schweißkraftbedingungen vor, sodass im Wesentlichen nur im Bereich des Hauptabschnittes die eigentliche Bearbeitung stattfindet.

Des Weiteren kann vorgesehen sein, dass der Fasenabschnitt eine in Umfangsrichtung in Richtung der Hauptabschnitte größer werdende Breite aufweist. Mit anderen Worten schließt sich an den Hauptabschnitt ein Fasenabschnitt an, der spitz zulaufend ist, wodurch sichergestellt wird, dass die Kraft, die das Gegenwerkzeug auf die Sonotrode ausübt, allmählich ansteigt.

In einer weiteren bevorzugten Ausführungsform ist vorgesehen, dass die Seitenfläche gegenüber einer Normalen auf der Trägerfläche geneigt ist, wobei vorzugsweise der Neigungswinkel kleiner als 25° und besonders bevorzugt zwischen 5° und 20° beträgt.

Die Strukturelemente sind mit Vorteil länglich geformt, wobei die Längsseite in Umfangsrichtung angeordnet ist. Dabei kann es von Vorteil sein, dass in axialer Richtung auf der Trägerfläche mehr als zwei Strukturelemente voneinander beabstandet angeordnet sind. Vorstellbar ist hier auch eine Vielzahl von gleichartigen Strukturelementen.

Des Weiteren betrifft die Erfindung eine Ultraschallbearbeitungsmaschine mit einer Sonotrode und einem Amboss, wobei Sonotrode und/oder Amboss entsprechend dem beschriebenen Bearbeitungselement ausgebildet sind.

Weitere Vorteile, Merkmale und Anwendungsmöglichkeiten der vorliegenden Erfindung werden deutlich anhand der folgenden Beschreibung einer bevorzugten Ausführungsform. Es zeigen:
- Figur 1: eine schematische Darstellung einer Ultraschallbearbeitungseinrichtung,
- Figuren 2 bis 5: verschiedene Ansichten von Strukturelementen einer ersten Ausführungsform der Erfindung,
- Figuren 6 bis 9: verschiedene Ansichten von Strukturelementen einer zweiten Ausführungsform der Erfindung und
- Figuren 10 bis 13: verschiedene Ansichten von Strukturelementen einer dritten Ausführungsform der Erfindung.

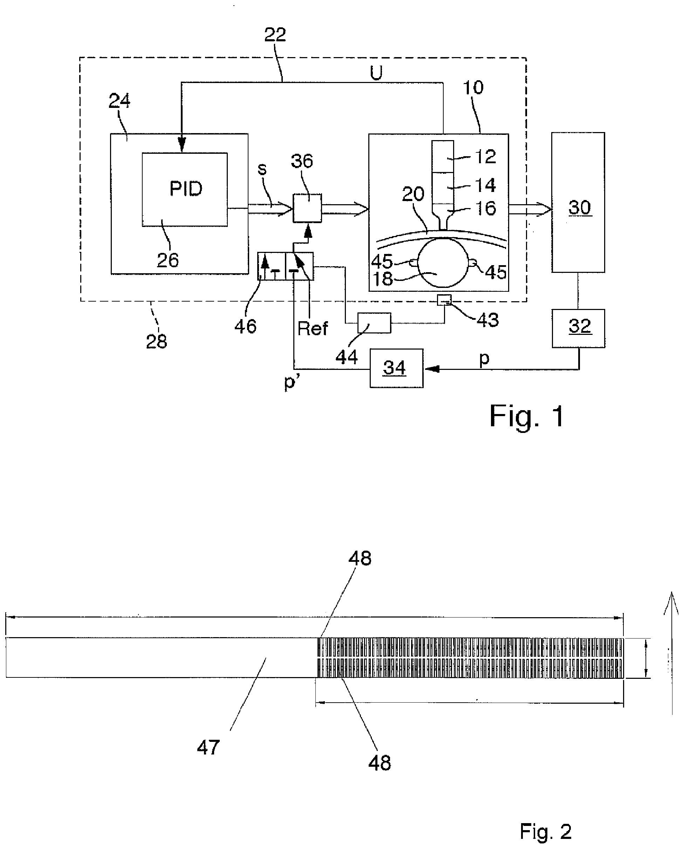

Figur 1 zeigt ein Schaubild einer Ultraschallbearbeitungsvorrichtung. Diese weist ein Schwingsystem 10 auf, welches einen Konverter 12, einen Amplitudentransformator 14, eine Ultraschallsonotrode 16 und ein Gegenwerkzeug 18 umfasst. Zwischen Sonotrode 16 und Gegenwerkzeug 18 ist das zu bearbeitende Material 20, wie zum Beispiel eine Materialbahn, angeordnet. Der Konverter 12 wird mittels eines Ultraschallgenerators (nicht gezeigt) mit einer Wechselspannung versorgt.

Bei der gezeigten Ausführungsform werden dem Schwingsystem 10 Signale (U) entnommen, die über eine Rückführstrecke 22 einer Regeleinrichtung 24 zugeführt werden. Diese Regeleinrichtung 24 weist einen PID-Regler 26 auf. Die Regeleinrichtung 24 erzeugt eine Stellgröße (S), welche dem Schwingsystem 10 und insbesondere dem Konverter 12 zugeführt wird. Das Schwingsystem 10 mit der Regeleinrichtung 24 bildet einen geregelten elektrischen und mechanischen Schwingkreis 28. Die Regeleinrichtung 24 kann in den Ultraschallgenerator integriert sein. Mit der Bezugszahl 30 ist ein Bearbeitungsprozess, insbesondere ein Schweißprozess, bezeichnet, der außerhalb des Schwingkreises 28 liegt, da er nicht direkt von den elektrischen und mechanischen Größen beeinflusst wird. Dieser Bearbeitungsprozess 30 ist mit einem Kraftsensor 32 verbunden, mit welchem der Verlauf der Schweißkraft ermittelt wird. Der Kraftsensor 32 ermittelt eine Prozessgröße (p), die einer Skaliereinheit 34 zugeführt wird. Diese Skaliereinheit 34 liefert eine skalierte Prozessgröße (p'), die einer Verknüpfungsstelle 36 zugeführt wird. Diese Verknüpfungsstelle 36 befindet sich zwischen der Regeleinrichtung 24 und dem Schwingsystem 10, sodass nicht nur die skalierte Prozessgröße (p'), sondern auch die Stellgröße (S) der Verknüpfungsstelle 36 zugeführt wird. Die miteinander verknüpften Größen (p') und (S) werden dem Schwingsystem 10 und insbesondere dem Ultraschallgenerator 12 zugeführt.

Man erkennt, dass die Trägerfläche des walzenförmigen Gegenwerkzeugs 18 zwei gegenüberliegende Strukturelemente 45 aufweist. Diese können beispielsweise längliche Rippen sein, die in axialer Richtung angeordnet sind. Bei der Bearbeitung der Materialbahn 20 wird das Gegenwerkzeug 18 um seine Achse gedreht, sodass die beiden Strukturelemente 45 nacheinander mit der Materialbahn 20 in Kontakt treten und dann, wenn die Materialbahn zwischen Sonotrode 16 und Strukturelement 45 eingeklemmt ist, für die Erzeugung einer Quersiegelnaht sorgen. Die Anzahl der Strukturelemente ist prinzipiell beliebig.

Immer dann, wenn eines der beiden Strukturelemente 45 über die Materialbahn 20 auf die Sonotrode 16 gepresst wird, wird dies dazu führen, dass über den Kraftsensor 32 eine abrupte Veränderung der Kraft gemessen wird. Wenn sich jedoch die Schweißkraft erhöht, muss die Sonotrode eine entsprechende Gegenkraft zur Verfügung stellen, d.h. es kommt zu einer zwar geringen, jedoch merklichen elastischen Verformung des Sonotrodenhalters. Sobald das Strukturelement 45 nicht mehr auf die Sonotrode 16 drückt, wird die Sonotrode sich wieder in ihre ursprüngliche Position zurückbewegen.

Aufgrund der elastischen Eigenschaften des Sonotrodenhalters wird dies jedoch zu einem Überschwingen führen, sodass der zeitliche Verlauf der Schweißkraft die Form einer gedämpften Schwingung aufweist. Da die Schweißkraft über den Sensor 32 jedoch kontinuierlich gemessen wird, wird in der Regel die geänderte Schweißkraft auch über die Verknüpfungsstelle 36 ununterbrochen zugeführt, sodass auch dann, wenn die Erhebung 45 nicht in Kontakt mit der Materialbahn 20 ist, die gedämpfte Schwingung als skalierte Prozessgröße p' der Verknüpfung 36 zugeführt wird und die Regelung beeinflusst.

Um das Regelungsverhalten zu verbessern, ist auch schon vorgeschlagen worden, eine Triggereinrichtung 44 vorzusehen, welche mit Hilfe eines Positionssensors 43 die Position des Strukturelementes 45 bestimmt und in Abhängigkeit von der Bestimmung den Schalter 46 betätigt, sodass die Verknüpfungsstelle 36 entweder mit der skalierten Prozessgröße p' oder mit einem konstanten Referenzwert ref verbunden ist.

Durch diese Maßnahme kann zwar das Regelungsverhalten verbessert werden, es ändert jedoch nichts an der abrupten Schwingbewegung der Sonotrode.

Erfindungsgemäß wird daher vorgeschlagen, den Strukturelementen 45 eine spezielle Form zu geben.

In Figur 2 ist eine Draufsicht von oben auf die Oberseite einer zylindersegmentförmigen Trägerfläche 47 gezeigt. Die Trägerfläche 47 weist daher eine Krümmung auf, deren Krümmungsradius dem Abstand der Trägerfläche von der Drehachse entspricht. Auf der Trägerfläche sind zwei Reihen bestehend aus einer Vielzahl von Strukturelementen 48 angeordnet.

Die linke Seite der Trägerfläche weist hier keine Strukturelemente auf.

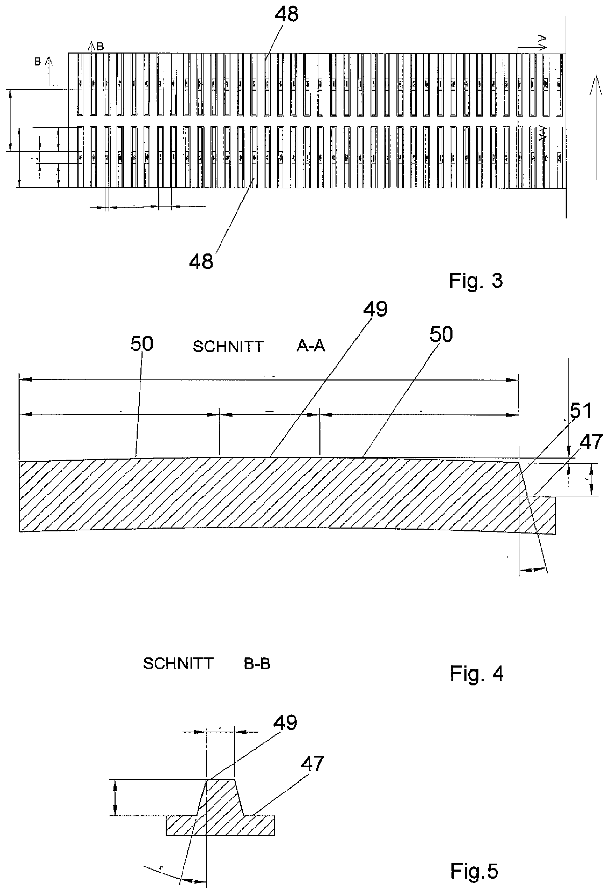

In Figur 3 ist eine Draufsicht auf die Strukturelemente 48 von Figur 2 dargestellt.

Figur 4 zeigt eine Schnittansicht entlang der Linie A-A, d.h. eine Schnittansicht senkrecht zur Drehachse.

Figur 5 zeigt eine Schnittansicht entlang der Linie B-B, d.h. die Schnittebene verläuft parallel zur Drehachse.

Man erkennt, dass das Strukturelement 48 einen Hauptabschnitt 49 und zwei Fasenabschnitte 50 sowie einen Seitenabschnitt 51 aufweist. Der Hauptabschnitt 49 ist gekrümmt ausgeführt und zwar mit einem Krümmungsradius, der dem Abstand des Hauptabschnittes von der Drehachse des Gegenwerkzeuges entspricht. In Umfangsrichtung beidseitig anschließend erkennt man zwei Fasenabschnitte 50, die gegenüber dem Hauptabschnitt 49 abgewinkelt sind, sodass sie in der gezeigten Ansicht in Figur 4 unterhalb einer Tangente an dem Hauptabschnitt 49 liegen. Der Winkel, den in dieser Ansicht Hauptabschnitt und Fasenabschnitt einschließen, ist größer als 170° und liegt vorzugsweise zwischen 185° und 189,5°. Durch die erfindungsgemäße Maßnahme der Ausbildung der Fasenabschnitte 50 ist bei der Bearbeitung des Materials gewährleistet, dass das Material zunächst zwischen Fasenabschnitt 50 und Sonotrode geführt wird, sodass der Abstand zwischen Gegenwerkzeug und Sonotrode allmählich geringer wird, bis das Material vom Hauptabschnitt 49 bearbeitet wird. Erst wenn der Hauptabschnitt 49 das Material bearbeitet, liegen optimale Schweißkraftbedingungen vor, sodass im Wesentlichen nur im Bereich des Hauptabschnittes die eigentliche Bearbeitung stattfindet. Nachdem diese stattgefunden hat, ist die Auslauffase 50 dafür zuständig, dass der Abstand zwischen Sonotrode und Gegenwerkzeug sich allmählich vergrößert.

Bei der gezeigten Ausführungsform sind die Seitenflächen 51 gegenüber einer Normalen auf die Trägerfläche 47 geneigt. Der Neigungswinkel beträgt bei der gezeigten Ausführungsform 15°.

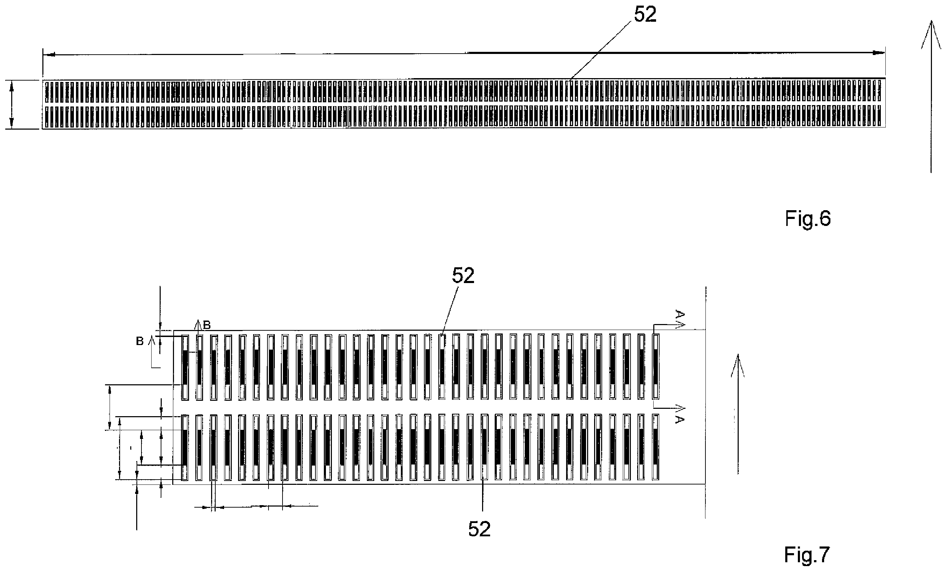

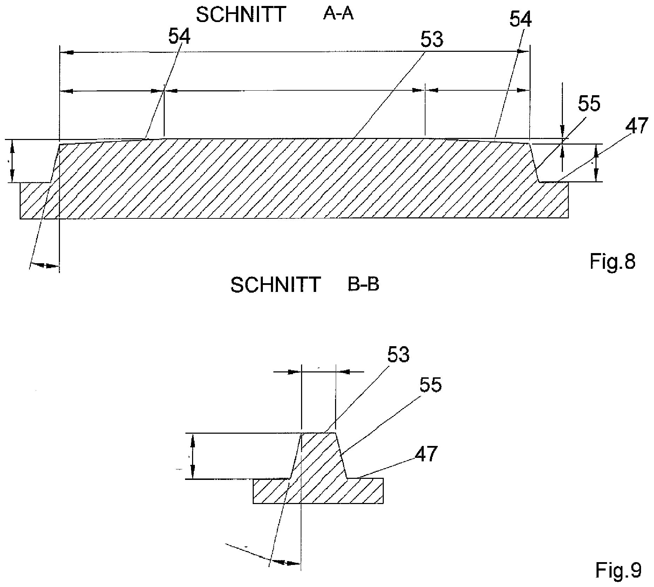

In den Figuren 6 bis 9 ist eine alternative Ausführungsform der Strukturelemente gezeigt. Wie in Figur 6 zu erkennen ist, die ebenfalls eine Draufsicht auf eine zylindersegmentförmige Trägerfläche zeigt, weist diese nun über ihre gesamte Länge zwei Reihen bestehend aus einer Vielzahl von Strukturelementen 52 auf. Diese sind in Figur 7 vergrößert dargestellt. Figur 8 zeigt eine Schnittansicht entlang der Linie A-A und Figur 9 eine Schnittansicht entlang der Linie B-B. Man erkennt, dass im Unterschied zu der in den Figuren 2 bis 5 gezeigten Ausführungsform der Hauptabschnitt 53 im Verhältnis zu den Fasenabschnitten 54 deutlich größer ist. Auch hier ist ein Seitenabschnitt 55 vorgesehen, der die Oberseite der Strukturelemente 52 mit der Trägerfläche 47 verbindet. Die erfindungsgemäßen Fasenabschnitte 54 sind für die eigentliche Materialbearbeitung von keiner bis untergeordneter Bedeutung. Sie dienen lediglich dazu, den Abstand zwischen Gegenwerkzeug und Sonotrode und damit die vom Gegenwerkzeug auf die Sonotrode aufgebrachte Kraft, allmählich zu erhöhen bzw. allmählich zu verringern, um ein Schwingen der Sonotrode im Maschinenständer aufgrund der Elastizität der Halterung zu verhindern oder zumindest zu verringern. Wenn, wie im gezeigten Beispiel, zwei Reihen bestehend aus einer Vielzahl von Strukturelementen 52 in Bearbeitungsrichtung hintereinander angeordnet sind, muss ein Mindestabstand zwischen den Hauptabschnitten 53 der hintereinander angeordneten Strukturelemente verbleiben, der mindestens das Zweifache der Länge des Fasenabschnittes beträgt. In der Praxis hat sich gezeigt, dass der Abstand zwischen zwei in Umfangs- bzw. Bearbeitungsrichtung hintereinander angeordneten Hauptabschnitten zwischen dem 2,5- und 3,5-fachen der Länge des Fasenabschnittes beträgt.

Je länger der Fasenabschnitt ist, umso ausgeprägter ist der erfindungsgemäße Effekt und umso größer ist der notwendige Abstand zu dem nachfolgenden Strukturelement. In der Praxis hat sich daher eine Länge des Fasenabschnittes zwischen 10% und 400% der Länge des Hauptabschnittes und vorzugsweise zwischen 30 und 200% der Länge des Hauptabschnittes bewährt.

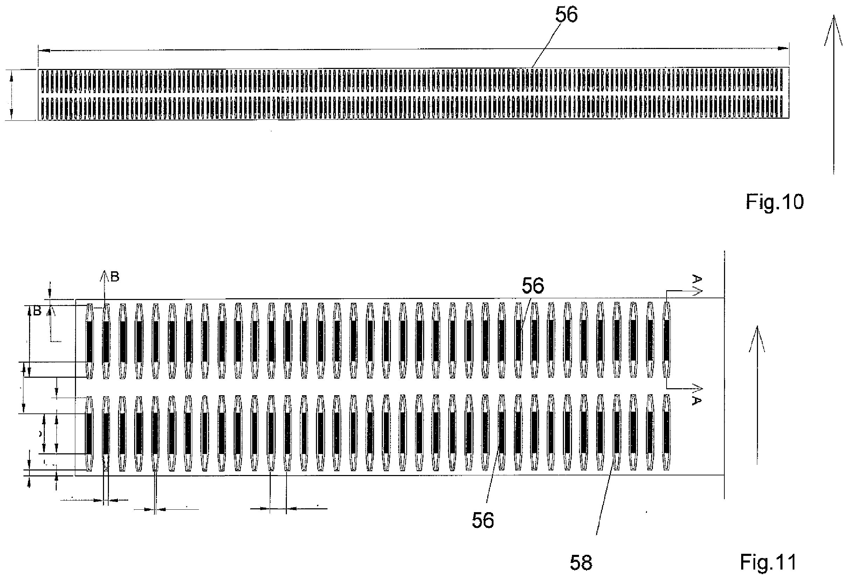

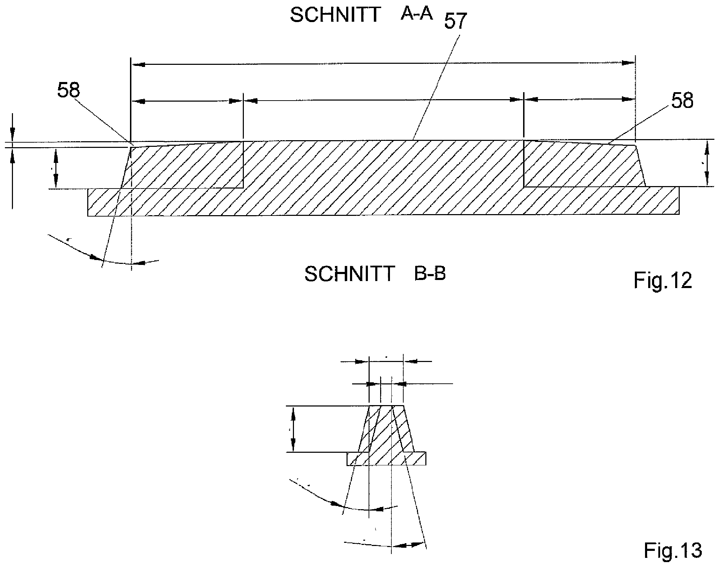

Schließlich ist in den Figuren 10 bis 13 eine dritte Ausführungsform der erfindungsgemäßen Strukturelemente gezeigt. Auch hier zeigt Figur 10 eine Draufsicht von oben auf eine zylindersegmentförmige Trägerfläche, auf der zwei Reihen mit einer Vielzahl von Strukturelementen 56 angeordnet sind. Die Strukturelemente 56 sind in Figur 11 noch einmal vergrößert dargestellt, wobei Figuren 12 und Figur 13 jeweils Schnittansichten entlang der Linien A-A bzw. B-B darstellen. Man erkennt in der Draufsicht in Figur 11, dass die Fasenabschnitte 58 hier spitz zulaufend ausgebildet sind. Ansonsten entspricht die Ausführungsform im Wesentlichen den beiden zuvor beschriebenen Ausführungsformen.

### Bezugszeichenliste

- 10: Schwingsystem
- 12: Konverter
- 14: Amplitudentransformator
- 16: Ultraschallsonotrode
- 18: Gegenwerkzeug
- 20: Material
- 22: Rückführstrecke
- 24: Regeleinrichtung
- 26: PID-Regler
- 28: Schwingkreis
- 30: Bearbeitungsprozess
- 32: Kraftsensor
- 34: Skaliereinheit
- 36: Verknüpfungsstelle
- 43: Positionssensor
- 44: Triggereinrichtung
- 45, 48, 52, 56: Strukturelemente
- 46: Schalter
- 47: Trägerfläche
- 49, 53, 57: Hauptabschnitt
- 50, 54, 58: Fasenabschnitte
- 51, 55: Seitenabschnitt

## Patentansprüche

1. Bearbeitungselement, als Sonotrode oder Amboss ausgebildet, mit einer im wesentlichen zylinderförmigen oder zylindersegmentförmigen Trägerfläche, die dafür vorgesehen ist, während der Bearbeitung mit dem Material in Kontakt zu treten, wobei das Bearbeitungselement dafür vorgesehen ist, während der Bearbeitung um seine Längsachse gedreht zu werden, so dass die Trägerfläche auf dem zu bearbeitenden Material abrollt, wobei auf der Trägerfläche zumindest ein Strukturelement angeordnet ist, welches in radialer Richtung über der Trägerfläche vorsteht, wobei das Strukturelement eine Oberseite aufweist, die dafür vorgesehen ist, mit dem zu bearbeitenden Material in Kontakt zu treten, **dadurch gekennzeichnet, dass** die Oberseite zumindest abschnittsweise in Umfangsrichtung mit einem Krümmungsradius, der größer als 50% des größten Abstands der Oberseite von der Zylinderachse und kleiner als der größte Abstand der Oberseite von der Zylinderachse ist, konvex gekrümmt ist oder aus mindestens zwei Flächenabschnitten besteht, die einen Winkel in Richtung der Zylinderachse einschließen, der kleiner als 180° und größer als 170° ist.

2. Bearbeitungselement nach Anspruch 1, **dadurch gekennzeichnet, dass** das Strukturelement eine Oberseite und mindestens eine umlaufende Seitenfläche aufweist, welche die Oberseite und die Trägerfläche miteinander verbindet.

3. Bearbeitungselement nach Anspruch 2, **dadurch gekennzeichnet, dass** die Oberseite einen Hauptabschnitt, der im Wesentlichen eben oder mit einer konvexen Krümmung mit einem Krümmungsradius, der dem Abstand des Hauptabschnittes von der Zylinderachse entspricht, ausgeführt ist, und einen sich in Umfangsrichtung an den Hauptabschnitt anschließenden Fasenabschnitt aufweist, der gegenüber dem Hauptabschnitt abgewinkelt ist, so dass Haupt- und Fasenabschnitt einen Winkel < 180° in Richtung der Zylinderachse einschließen.

4. Bearbeitungselement nach Anspruch 3, **dadurch gekennzeichnet, dass** die Oberseite zwei sich in Umfangsrichtung an gegenüberliegenden Seiten an den Hauptabschnitt anschließende Fasenabschnitte aufweist, die jeweils gegenüber dem Hauptabschnitt abgewinkelt sind, so dass Haupt- und Fasenabschnitt jeweils einen Winkel < 180° in Richtung der Zylinderachse einschließen.

5. Bearbeitungselement nach einem der Ansprüche 3 bis 4, **dadurch gekennzeichnet, dass** der Winkel in Richtung der Zylinderachse der Hauptabschnitt und die Fasenabschnitte in Richtung der Zylinderachse einschließen, größer als 170° ist.

6. Bearbeitungselement nach einem der Ansprüche 3 bis 5, **dadurch gekennzeichnet, dass** der Fasenabschnitt in Umfangsrichtung eine Länge hat, die zwischen 10% und 400% und vorzugsweise zwischen 30 und 200% der Länge des Hauptabschnitts in Umfangsrichtung beträgt.

7. Bearbeitungselement nach einem der Ansprüche 3 bis 6, **dadurch gekennzeichnet, dass** der Fasenabschnitt eine in Umfangsrichtung in Richtung der Hauptabschnitte größer werdende Breite aufweist.

8. Bearbeitungselement nach einem der Ansprüche 1 bis 7, **dadurch gekennzeichnet, dass** das Strukturelement länglich geformt ist, wobei die Längsseite in Umfangsrichtung angeordnet ist.

9. Bearbeitungselement nach einem der Ansprüche 1 bis 8, **dadurch gekennzeichnet, dass** in axialer Richtung auf der Trägerfläche mehr als zwei Strukturelemente voneinander beabstandet angeordnet sind.

10. Bearbeitungselement nach einem der Ansprüche 1 bis 9, **dadurch gekennzeichnet, dass** in Umfangsrichtung auf der Trägerfläche zwei Strukturelemente hintereinander aber voneinander beabstandet angeordnet sind.

11. Bearbeitungselement nach einem der Ansprüche 3 bis 10, **dadurch gekennzeichnet, dass** der Fasenabschnitt zumindest abschnittsweise in Umfangsrichtung mit einem Krümmungsradius, der kleiner als der größte Abstand der Oberseite von der Zylinderachse und größer als die Hälfte des größten Abstandes der Oberseite von der Zylinderache, konvex gekrümmt ist.

12. Bearbeitungselement nach einem der Ansprüche 1 bis 11, **dadurch gekennzeichnet, dass** die Oberseite zumindest abschnittsweise in Umfangsrichtung mit einem Krümmungsradius, der kleiner als der größte Abstand der Oberseite von der Zylinderachse und größer als die Hälfte des größten Abstandes der Oberseite von der Zylinderachse ist, konvex gekrümmt ist

13. Ultraschallbearbeitungsmaschine mit einer Sonotrode und einem Amboss, **dadurch gekennzeichnet, dass** Sonotrode und/oder Amboss gemäß einem der Ansprüche 1 bis 12 ausgebildet sind.

## Claims

1. A processing element in the form of a sonotrode or an anvil, comprising a carrier surface which is substantially in the form of a cylinder or in the form of a segment of a cylinder and which is intended to come into contact with the material during processing, wherein the processing element is intended to be rotated about its longitudinal axis during processing so that the carrier surface rolls on the material to be processed, wherein arranged on the carrier surface is at least one structure element which projects beyond the carrier surface in the radial direction, wherein the structure element has a top side which is provided to come into contact with the material to be processed, **characterised in that** the top side is at least portion-wise convexly curved in the peripheral direction with a radius of curvature which is greater than 50% of the greatest spacing of the top side from the cylinder axis and less than the greatest spacing of the top side from the cylinder axis or comprises at least two surface portions which include an angle in the direction of the cylinder axis, which is less than 180° and greater than 170°.

2. A processing element as set forth in claim 1 **characterised in that** the structure element has a top side and at least one peripherally extending side surface which connects the top side and the carrier surface together.

3. A processing element as set forth in claim 2 **characterised in that** the top side has a main portion which is substantially flat or has a convex curvature with a radius of curvature corresponding to the spacing of the main portion from the cylinder axis, and a bevel portion which adjoins the main portion in the peripheral direction and which is angled with respect to the main portion so that the main portion and the bevel portion include an angle <180° in the direction of the cylinder axis.

4. A processing element as set forth in claim 3 **characterised in that** the top side has two bevel portions which adjoin the main portion in the peripheral direction at opposite sides and which are respectively angled with respect to the main portion so that the main portion and the bevel portion respectively include an angle <180° in the direction of the cylinder axis.

5. A processing element as set forth in one of claims 3 through 4 **characterised in that** the angle in the direction of the cylinder axis that the main portion and the bevel portions include in the direction of the cylinder axis is greater than 170°.

6. A processing element as set forth in one of claims 3 through 5 **characterised in that** the bevel portion is of a length in the peripheral direction, that is between 10% and 400% and preferably between 30% and 200% of the length of the main portion in the peripheral direction.

7. A processing element as set forth in one of claims 3 through 6 **characterised in that** the bevel portion is of a width which in the peripheral direction increases in the direction of the main portions.

8. A processing element as set forth in one of claims 1 through 7 **characterised in that** the structure element is of an elongate shape, the long side being arranged in the peripheral direction.

9. A processing element as set forth in one of claims 1 through 8 **characterised in that** more than two structure elements are arranged in mutually spaced relationship in the axial direction on the carrier surface.

10. A processing element as set forth in one of claims 1 through 9 **characterised in that** two structure elements are arranged in succession but in mutually spaced relationship in the peripheral direction on the carrier surface.

11. A processing element as set forth in one of claims 3 through 10 **characterised in that** the bevel portion is at least portion-wise convexly curved in the peripheral direction with a radius of curvature which is less than the greatest spacing of the top side from the cylinder axis and greater than half the greatest spacing of the top side from the cylinder axis.

12. A processing element as set forth in one of claims 1 through 11 **characterised in that** the top side is at least portion-wise convexly curved in the peripheral direction with a radius of curvature which is less than the greatest spacing of the top side from the cylinder axis and greater than half the greatest spacing of the top side from the cylinder axis.

13. An ultrasonic processing machine comprising a sonotrode and an anvil **characterised in that** the sonotrode and/or anvil is as set forth in one of claims 1 through 12.

## Revendications

1. Élément d'usinage, réalisé sous forme de sonotrode ou d'enclume, comprenant une surface support sensiblement cylindrique ou en forme de segments cylindriques, qui est destinée à entrer en contact avec le matériau pendant l'usinage, l'élément d'usinage étant prévu pour être amené en rotation autour de son axe longitudinal pendant l'usinage de sorte que la surface support roule sur le matériau à usiner, au moins un élément structurel étant disposé sur la surface support, lequel fait saillie de la surface support en direction radiale, l'élément structurel comportant une face supérieure destinée à entrer en contact avec le matériau à usiner,
**caractérisé en ce que**
la face supérieure est courbée de manière convexe au moins en partie dans la direction périphérique selon un rayon de courbure qui est supérieur à 50% de l'écart le plus important entre la face supérieure et l'axe de cylindre et inférieur à l'écart le plus important entre la face supérieure et l'axe de cylindre, ou est constituée d'au moins deux parties de surface qui forment, en direction de l'axe de cylindre, un angle inférieur à 180° et supérieur à 170°.

2. Élément d'usinage selon la revendication 1, **caractérisé en ce que** l'élément structurel présente une face supérieure et au moins une surface latérale périphérique qui relie entre elles la face supérieure et la surface support.

3. Élément d'usinage selon la revendication 2, **caractérisé en ce que** la face supérieure présente une partie principale qui est réalisée de manière sensiblement plane ou présente une courbure convexe dont le rayon de courbure correspond à l'écart entre la partie principale et l'axe de cylindre, et une partie chanfrein se raccordant à la partie principale dans la direction périphérique, qui est coudée par rapport à la partie principale de sorte que la partie principale et la partie chanfrein forment un angle < 180° en direction de l'axe de cylindre.

4. Élément d'usinage selon la revendication 3, **caractérisé en ce que** la face supérieure présente deux parties chanfrein se raccordant à la partie principale, en direction périphérique, sur des côtés opposés, lesquelles sont respectivement coudées par rapport à la partie principale de sorte que la partie principale et la partie chanfrein forment respectivement un angle < 180° en direction de l'axe de cylindre.

5. Élément d'usinage selon l'une des revendications 3 à 4, **caractérisé en ce que** l'angle, en direction de l'axe de cylindre, que forment la partie principale et les parties chanfrein dans la direction de l'axe de cylindre est supérieur à 170°.

6. Élément d'usinage selon l'une des revendications 3 à 5, **caractérisé en ce que** la partie chanfrein a une longueur, dans la direction périphérique, qui est comprise entre 10% et 400% et, de préférence, entre 30 et 200% de la longueur de la partie principale en direction périphérique.

7. Élément d'usinage selon l'une des revendications 3 à 6, **caractérisé en ce que** la partie chanfrein présente une largeur qui augmente en direction périphérique dans la direction des parties principales.

8. Élément d'usinage selon l'une des revendications 1 à 7, **caractérisé en ce que** l'élément structurel a une forme allongée, la face longitudinale étant disposée dans la direction périphérique.

9. Élément d'usinage selon l'une des revendications 1 à 8, **caractérisé en ce que** plus de deux éléments structurels sont disposés à distance les uns des autres sur la surface support en direction axiale.

10. Élément d'usinage selon l'une des revendications 1 à 9, **caractérisé en ce que** deux éléments structurels sont disposés l'un derrière l'autre mais à distance l'un de l'autre sur la surface support en direction axiale.

11. Élément d'usinage selon l'une des revendications 3 à 10, **caractérisé en ce que** la partie chanfrein est courbée de manière convexe au moins en partie dans la direction périphérique selon un rayon de courbure inférieur à l'écart le plus important entre la face supérieure et l'axe de cylindre et supérieur à la moitié de l'écart le plus important entre la face supérieure et l'axe de cylindre.

12. Élément d'usinage selon l'une des revendications 1 à 11, **caractérisé en ce que** la face supérieure est courbée de manière convexe au moins en partie dans la direction périphérique selon un rayon de courbure inférieur à l'écart le plus important entre la face supérieure et l'axe de cylindre et supérieur à la moitié de l'écart le plus important entre la face supérieure et l'axe de cylindre.

13. Machine d'usinage par ultrasons comprenant une sonotrode et une enclume, **caractérisée en ce que** la sonotrode et/ou l'enclume sont configurées selon l'une des revendications 1 à 12.
